# EUROPEAN PATENT SPECIFICATION

(11) **EP 1 002 889 B1**
(45) Date of publication and mention of the grant of the patent: **20.04.2005**
(21) Application number: 99123109.3
(22) Date of filing: 18.11.1999
(51) Int. Cl.: C23C 22/68, B05D 3/10, B05D 7/14, C09D 5/08

(54) **Anti-corrosive coating compositions and methods for metal materials**
Antikorrosive Beschichtungszusammensetzung für Metalle und Verfahren
Compositions et procédés de revêtement anticorrosif pour métaux

(30) Priority: 18.11.1998 JP 32804098
(43) Date of publication of application: 24.05.2000
(73) Proprietor: Nippon Paint Co., Ltd., Osaka-shi Osaka-fu (JP)
(72) Inventor: Shimakura, Toshiaki, Ichikawa-shi, Chiba-ken (JP); Yamasoe, Katsuyoshi, Sakura-shi, Chiba-ken (JP)
(74) Representative: HOFFMANN - EITLE

(56) References cited:
- EP-A- 0 153 973
- EP-A- 0 391 442
- EP-A- 0 558 837
- EP-A- 0 648 823
- EP-A- 0 839 931
- EP-A- 0 853 105
- EP-A- 0 949 353
- EP-A- 0 979 880
- WO-A-95/21277
- WO-A-96/03534
- WO-A-96/36747
- WO-A-98/16324
- WO-A-98/19798
- WO-A-99/14399
- WO-A-99/46342
- DE-A- 2 732 753
- GB-A- 2 211 762
- US-A- 4 339 310
- US-A- 4 828 616
- US-A- 5 292 549
- US-A- 5 389 405
- US-A- 5 393 353
- US-A- 5 433 976
- US-A- 5 801 217
- DATABASE WPI Section Ch, Week 197722 Derwent Publications Ltd., London, GB; Class E11, AN 1977-39114Y XP002130780 & JP 52 050940 A (NIPPON STEEL CORP), 23 April 1977 (1977-04-23)
- PATENT ABSTRACTS OF JAPAN vol. 008, no. 011 (C-205), 18 January 1984 (1984-01-18) & JP 58 177473 A (NIPPON SHOKUBAI KAGAKU KOGYO KK), 18 October 1983 (1983-10-18)

## Description

### BACKGROUND OF THE INVENTION

The present invention relates to an anti-corrosive coating composition for metal materials particularly zinc-coated steel plates or non-coated steel, a method for anti-corrosive treatment using it, and metal materials subjected to the anti-corrosive treatment.

Conventionally, chromate-based surface-treating agents for chromate treatment or chromate phosphate treatment are used in anti-corrosively treating compositions for metal and widely used even now. However, in view of a trend toward environmental regulation in recent years, there is the possibility that their use may be limited in the future due to the toxicity particularly carcinogenesis of chromium. Hence, there was a need for development for a chromium-free, anti-corrosively treating composition having equivalent corrosion resistance to that of chromium. As described in Japanese Patent Application No. Hei. 10-36264, the present inventors developed a non-chromium, anti-corrosively treating composition containing a thiocarbonyl group-containing compound, phosphate ions and further water-disperable silica in an aqueous resin. However, this system was regretfully insufficient in storage stability and there was a problem with corrosion resistance in the case of thin film. On one hand, with respect to silane coupling agents, there is an acidic surface-treating agent containing two kinds of silane coupling agents as disclosed in JP-KOKAI Hei. 8-73775, but this is a system utilized to improve fingerprint resistance and coating adhesion, and its corrosion resistance is not satisfactory for the purpose of achieving high corrosion resistance as required in the present invention after coating of an anti-corrosively treating composition. Further, JP-KOKAI Hei. 10-60315 discloses a surface treating agent for steel structures which comprises a silane coupling agent having a specific functional group reacting with an aqueous emulsion, but the corrosion resistance required in this prior art is against a relatively mild test such as wetting test, which is in comparable to the corrosion resistance of the anti-corrosively treating composition in the present invention which as thin film, is durable in a severe anti-corrosion test such as saline spray test. From the foregoing, there was a need for the development of a non-chromium, anti-corrosively treating composition which exhibits corrosion resistance for thin film.

### SUMMARY OF THE INVENTION

The present invention provides an anti-corrosive coating composition suitable for metal, particularly zinc-coated steel plates, which is free of chromium, is capable of conferring excellent corrosion resistance on a metal coated therewith, and is excellent in storage stability.

The first embodiment of the present invention relates to an anti-corrosive coating composition comprising a silane coupling agent and/or hydrolyzate condensates thereof in water in an amount of 0.1 to 50 g per one liter of the composition.

The second embodiment of an anti-corrosive coating composition of the present invention comprises in addition to the first embodiment of the composition at least one kind of phosphorus-containing ions in an amount of 0.1 to 100 g/l and/or at least one kind of sulfur-containing compound or sulfur-containing ions in an amount of 0.1 to 100 g/l.

The third embodiment of the present invention relates to an anti-corrosive coating composition comprising a silane coupling agent and/or hydrolyzate condensates thereof in an amount of 0.1 to 50 g/l in one liter of an aqueous resin solution or an aqueous resin suspension.

The fourth embodiment of an anti-corrosive coating composition of the present invention comprises in addition to the third embodiment, at least one kind of phosphorus-containing ions in an amount of 0.1 to 5 g/l, and/or at least one kind of sulfur-containing compound or sulfur-containing ions in an amount of 0.1 to 50 g/l.

In addition, the present invention relates to a method for anti-corrosive coating of metal materials, which comprises coating metal materials with the anti-corrosive coating composition described above.

Further, the present invention relates to a method for anti-corrosive coating of metal materials, which comprises coating metal materials with the resin-free, anti-corrosive coating composition described above, then drying and coating it with an anti-corrosive coating composition containing at least an aqueous resin solution or an aqueous resin suspension and a silane coupling agent.

Furthermore, the present invention relates to an anti-corrosively treated metal material comprising metal materials coated with any one of the anti-corrosive coating compositions described above.

In addition, the present invention relates to an anti-corrosively treated metal material comprising metal materials coated by any one of the anti-corrosive-coating methods described above.

### DETAILED DESCRIPTION OF THE INVENTION

The present invention relates to an anti-corrosive coating composition comprising a silane coupling agent and/or hydrolyzate condensates thereof in water in an amount of 0.1 to 50 g per one liter of the composition.

Further, the present invention relates to an anti-corrosive coating composition comprising a silane coupling agent and/or hydrolyzate condensates thereof, at least one kind of phosphorus-containing ions selected from the group consisting of phosphate ions, phosphite ions and hypophosphite ions, and/or at least one kind of sulfur-containing compound or sulfur-containing ions selected from the group consisting of thiocarbonyl compounds, triazine thiol compounds, sulfide ions, persulfate ions and thiosulfate ions in water in an amount of 0.1 to 50g, 0.1 to 100g and 0.1 to 100 g per one liter of the composition respectively.

In addition, the present invention relates to an anti-corrosive coating composition comprising a silane coupling agent and/or hydrolyzate condensates thereof in an amount of 0.1 to 50 g in one liter of an aqueous resin solution or an aqueous resin suspension.

Furthermore, the present invention relates to an anti-corrosive coating composition comprising a silane coupling agent and/or hydrolyzate condensates thereof, at least one kind of phosphorus-containing ions selected from the group consisting of phosphate ions, phosphite ions and hypophosphite ions, and/or at least one kind of sulfur-containing compound or sulfur-containing ions selected from the group consisting of thiocarbonyl compounds, triazine thiol compounds, sulfide ions, persulfate ions and thiosulfate ions in water in an amount of 0.1 to 50g, 0.1 to 5g and 0.1 to 50 g in one liter of an aqueous resin solution or an aqueous resin suspension respectively.

In addition, the present invention relates to a method for anti-corrosive coating of metal materials, which comprises coating metal materials with the anti-corrosive coating composition described above.

Further, the present invention relates to a method for anti-corrosive coating of metal materials, which comprises coating metal materials with the resin-free, anti-corrosive coating composition described above, then drying and coating it with an anti-corrosive coating composition containing at least in a silane coupling agent an aqueous resin solution or an aqueous resin suspension.

Furthermore, the present invention relates to metal materials coated with any one of the anti-corrosive coating compositions described above.

Finally, the present invention relates to anti-corrosively treated metal materials coated by any one of the anti-corrosive-coating methods described above.

In the present invention, the action of the sulfur-containing compounds and phosphorus-containing ions is not evident, but the following is conceivable.

Sulfide ions tend to react with metal, especially a zinc surface to form stable metal sulfide. For example, zinc sulfide is one of the most stable zinc compounds as naturally existing zincblende. Accordingly, it is considered that by forming a film of zinc sulfide on the galvanized surface, corrosion resistance and coating adhesion are improved. The corrosion resistance and coating adhesion are further synergistically improved in the presence of phosphorus-containing ions, but the reason for this improvement is not elucidated.

Other sulfur-containing compounds also improve corrosion resistance and coating adhesion because sulfur atoms easily adhere to a metal surface to form an absorption layer of the sulfur-containing compounds. Both the corrosion resistance and coating adhesion are further synergistically improved in the presence of phosphorus-containing ions. The sulfur-containing compounds or phosphorus-containing ions, if present alone, merely lower a cathode electric current in galvanization, but if both of them are present, they lower electric currents of both the anode and cathode. This is considered to contribute to the improvement of corrosion resistance and coating adhesion.

With respect to the silane coupling agent, silanol groups in the silane compound are condensed with hydroxyl groups on a metal surface to form metaloxane bonds via which the silane compound binds strongly to the metal surface. On one hand, organic functional groups in the silane compound react with a resin to form strong bonds with the resin. Accordingly, in the presence of the silane compound, the resin film adheres strongly to the metal surface, thus raising corrosion resistance. Further, the binding of the silane compound to the metal surface is also considered to demonstrate a barrier effect to prevent corrosive materials from reaching the metal surface. It is considered that the silane compound adheres to sites to which the sulfur type compound or phosphorus type compound does not adhere, or the sulfur type compound or phosphorus type compound adheres to sites to which the silane compound does not adhere, and by their synergistic effect, corrosion resistance is improved. It is also considered that the silane compound reacts with the resin to act as a crosslinking agent to raise the barrier effect of the resin. Anyway, corrosion resistance is significantly improved by addition of the silane compound.

In the present specification the term "metal materials" means a sheet, a plate, a processed product or the like which is made of metal such as steel, zinc, aluminum, copper and the like; steel plated with metal such as Zn, Al, Ni, Cr, Sn, Pb, Fe, Co, Mg, Mn, Ti and the like; alloys made of at least two kinds of metals; steel alloyed with at least one of the above metals and in some cases hetero atoms or other impurities on the surface; metals such as steel in which an oxide such as silica, titania, alumina and the like or other elements such as carbon, silicon and the like are dispersed; non-plated metal such as non-plated steel and the like.

Typical examples of the metal materials are zinc-plated steel, aluminum-plated steel or non-plated steel, particularly zinc-plated steel.

The term "plating" or "plated" includes an electro-galvanizing, a fused metal plating, a deposition, an injection and the like.

The silane compound is used as an essential component in the anti-corrosive coating composition of the present invention. The silane compound is particularly preferably a silane coupling agent and/or hydrolyzate condensates thereof. The hydrolyzate condensates of the silane coupling agent refer to oligomers from the silane coupling agent subjected to hydrolysis and polymerization as the starting material.

The silane coupling agent used in the present invention is not particularly limited with preferable examples including: vinylmethoxysilane, vinyltrimethoxysilane, vinylethoxysilane, vinyltriethoxysilane, 3-aminopropyl triethoxysilane, 3-glycidoxypropyl trimethoxysilane, 3-methacryloxypropyl trimethoxysilane, 3-mercaptopropyl trimethoxysilane, N-(1,3-dimethylbutylidene)-3-(triethoxysilyl)-1-propane amine, N,N'-bis[3-(trimethoxysilyl)propyl] ethylenediamine, N-(β-aminoethyl)-γ-aminopropylmethyl dimethoxysilane, N-(β-aminoethyl)-γ-aminopropyl trimethoxysilane, γ-aminopropyl trimethoxysilane, γ-aminopropyl triethoxysilane, γ-glycidoxypropyl trimethoxysilane, γ-glycidoxypropyl triethoxysilane, γ-glycidoxypropylmethyl dimethoxysilane, 2-(3,4-epoxycyclohexyl) ethyl trimethoxysilane, γ-methacryloxypmpyl trimethoxysilane, γ-methacyloxypropyl trimethoxysilane, γ-mercaptopropyl trimethoxysilane, γ-mercaptopropyl triethoxysilane, and N-[2-(vinylbenzylamino)ethyl]-3-aminopropyl trimethoxysilane.

Particularly preferable silane coupling agents include vinylmethoxysilane, vinylethoxysilane, 3-aminopropyl triethoxysilane, 3-glycidoxypropyl trimethoxysilane, 3-methacryloxypropyl trimethoxysilane, 3-mercaptopropyl trimethoxysilane, N-(1,3-dimethylbutylidene)-3-(triethoxysilyl)-1-propane amine and N,N'-bis[3-(trimethoxysilyl)propyl] ethylenediamine. These silane coupling agents may be used alone or in combination thereof.

The silane coupling agent and/or hydrolyzate condensates thereof are used at a concentration of 0.1 to 50 g/l, preferably 0.3 to 20 g/l in the anti-corrosive coating composition. If the amount of the silane compound added is less than 0.1 g/l, the effect of its addition is observed to be lowered and the effect of improving corrosion resistance is insufficient, while an amount exceeding 50 g/l is uneconomical because the corrosion resistance is saturated.

The anti-corrosive coating composition of the present invention can be endowed with the ability to improve corrosion resistance by further adding a sulfur-containing compound and further phosphorus-containing ions in addition to the silane compound.

In order that the anti-corrosive treating coating agent is effective, it is generally necessary to satisfy: (1) immersion of a corrosive liquid is prevented, (2) the anti-corrosive film adheres to the metal substrate, (3) the metal surface is passivated by anti-corrosive ions etc. and (4) the anti-corrosive film has water resistance, acid resistance and alkali resistance. If any one of these is insufficient, the coating agent cannot exhibit rust resistance. The chromium compound as the conventional anti-corrosively treating composition was excellent mainly in passivation in (3) above. Here, passivation means that a metal or an alloy remains inactive even under the environment where it should be rendered chemically or electrochemically active.

The sulfur-containing compounds or sulfur-containing ions which are useful in the present invention are preferably thiocarbonyl group-containing compounds, triazine thiol compounds, sulfide ions and persulfate ions.

The thiocarbonyl group-containing compound may be any compound containing at least one thiocarbonyl group, such as thiourea, dimethyl thiourea, 1,3-diethyl thiourea, dipropyl thiourea, dibutyl thiourea, 1,3-diphenyl-2-thiourea, 2,2-ditolyl thiourea, thioacetamide, sodium dimethyl dithiocarbamate, tetramethyl thiuram monosulfide, tetrabutyl thiuram disulfide, zinc N-ethyl-N-phenyl dithiocarbamate, zinc dimethyl thiocarbamate, pentamethylene dithiocarbamate piperidine, zinc diethyldithiocarbamate, sodium diethyldithiocarbamate, zinc isopropyl xanthogenate, ethylene thiourea, dimethyl xanthogen disulfide, and dithioxamide.

The triazone thiol compound includes 2,4,6-trimercapto-S-triazine, 2-dibutylamino-4,6-dimercapto-S-triazine, 2,4,6-trimercapto-S-triazine-monosodium salt, 2,4,6-trimercapto-S-triazine-trisodium salt, 2-anilino-4,6-dimercapto-S-triazine, and 2-anilino-4,6-dimercapto-S-triazine-monosodium salt.

Sulfide ions can be formed in the anti-corrosive coating composition by adding a compound capable of releasing sulfide ions in an aqueous solution. Such compounds may be sulfides such as sodium sulfide, ammonium sulfide, manganese sulfide, molybdenum sulfide, iron sulfide and barium sulfide, which can release sulfide ions in an aqueous solution.

Persulfate ions can be formed in the anti-corrosive coating composition by adding a compound capable of releasing persulfate ions in an aqueous solution. Such compounds may be compounds such as ammonium persulfate, sodium persulfate and potassium persulfate, which can release persulfate ions in an aqueous solution.

Thiosulfate ions can be formed by a compound capable of releasing thiosulfate ions in an aqueous solution. Such compounds may include ammonium thiosulfate, sodium thiosulfate, potassium thiosulfate and the like.

In the present invention, at least one kind of the above-described sulfur-containing compound or sulfur-containing ions is contained in the anti-corrosive coating composition of the present invention.

Among these, triazine thiols and thiocarbonyl group-containing compounds are particularly preferable in respect of stability.

Among the compounds described above, those not dissolved directly in water are once dissolved in an alkali solution and then incorporated into the anti-corrosive coating composition.

The sulfur-containing compound or sulfur-containing ions are incorporated in an amount of 0.1 to 100 g/l, preferably 0.3 g to 50 g/l in the resin-free anti-corrosive coating composition.

If the amount of the sulfur-containing compound or sulfur-containing ions added is less than 0.1 g/l, corrosion resistance is insufficient, while an amount of more than 100 g/l is not economical because the effect of corrosion resistance is saturated.

The sulfur-containing compound or sulfur-containing ions are incorporated in an amount of 0.1 to 50 g/l in the resin-containing anti-corrosive coating composition. If their amount is less than 0.1 g/l, corrosion resistance is insufficient, while an amount of more than 50 g/l is not economical because the effect of corrosion resistance is saturated.

The phosphorus-containing ions useful in the present invention are preferably phosphate ions, phosphite ions, hypophosphite ions condensed phosphite ions, phytate ion, phosphonate ions and the like.

The compounds capable of releasing phosphate ions in the anti-corrosive coating composition of the present invention may be any compounds which can release phosphate ions in an aqueous solution, which include phosphoric acid; ammonium phosphates such as triammonium phosphate, diammonium hydrogen phosphate and ammonium dihydrogen phosphate; alkali metal phosphates such as trisodium phosphate, disodium hydrogen phosphate, sodium dihydrogen phosphate and tripotassium phosphate; alkaline earth metal phosphates such as zinc phosphate, calcium phosphate and magnesium phosphate; and iron phosphate, manganese phosphate and phosphomolybdic acid.

The compounds capable of releasing phosphite ions include compounds such as phosphorous acid, ammonium phosphite, sodium phosphite and potassium phosphite, which can release phosphorous ions in an aqueous solution.

The compounds capable of releasing hypophosphite ions may be compounds such as hypophosphorous acid, ammonium hypophosphite, sodium hypophosphite and potassium hypophosphite, which can release hypophosphorous ions in an aqueous solution.

At least one kind of these phosphorus-containing ions can be contained in the anti-corrosive coating composition of the present invention.

The phosphorus-containing ions are incorporated in an amount of 0.1 to 100 g/l, preferably 0.3 to 50 g/l in the resin-free, anti-corrosive coating composition. If the amount of phosphorus-containing ions is less than 0.1 g/l, corrosion resistance is insufficient, while an amount of more than 100 g/l is not economical because the effect of corrosion resistance is saturated.

The phosphorus-containing ions are incorporated in an amount of 0.1 to 5 g/l in the resin-containing, anti-corrosive coating composition. If the amount of phosphorus-containing ions is less than 0.1 g/l, corrosion resistance is insufficient, while an amount of more than 5 g/l is not economical because the anti-corrosive coating composition is gelled, the storage stability is lowered, and the effect of corrosion resistance is saturated.

In the anti-corrosive coating composition of the present invention, the resin is used as an aqueous solution or as an aqueous suspension such as emulsion or suspension.

The resin which can be used includes e.g. polyolefin type resin, polyurethane type resin, acrylic resin, polycarbonate type resin, epoxy type resin, polyester type resin, alkyd type resin, phenol type resin and other thermosetting resin, and cross-linkable resin is more preferable. Particularly preferable resin includes polyolefin type resin, polyurethane type resin and a mixed resin of both. Two or more kinds of the above resins may be used as a mixture.

In the anti-corrosive coating composition, the resin is used at a concentration of 1.0 to 800 g/l, preferably 50 to 400 g/l. If the amount of the resin incorporated is more than 800 g/l, viscosity is generally increased, the efficiency of coating operation is lowered, and the product is difficult to handle, while if the resin is used in an amount of less than 1.0 g/l, it is difficult to secure a predetermined thickness of the resulting resin film after coating, thus bringing about a reduction in corrosion resistance.

The surface-treating agent according to the present invention may further incorporate additional components. For example, pigments, surface active agents, solvents etc. can be mentioned.

As the pigments, it is possible to use various coloring pigments such as inorganic pigments such as titanium oxide (TiO₂), zinc oxide (ZnO), zirconium oxide (ZrO), calcium carbonate (CaCO₃), barium sulfate (BaSO₄), alumina (Al₂O₃), kaolin clay, carbon black and iron oxides (Fe₂O₃, Fe₃O₄), as well as organic pigments.

In the surface-treating agent of the present invention a solvent may be used to improve the film forming properties of resin and to form a uniform and smooth coating. The solvent is not particularly limited insofar as it is generally used for coating, and for example, alcohols, ketones, esters and ethers can be mentioned.

A steel plate can be coated with the anti-corrosive coating composition of the present invention, as follows. For example, a zinc-coated steel plate EG-MO material is sprayed at 60°C for 2 minutes with a detergent "Surf Cleaner 53S" (Nippon Paint Co., Ltd.), then washed with water, dried at 80°C, coated with the anti-corrosive coating composition with bar coater #3, and dried at a metal temperature of 150°C.

The present invention is illustrated in more detail by reference to the Examples.

### Example 1

3-Aminopropyl trimethoxysilane ("Saira Ace S-330", Chisso Corporation) was added at a concentration of 10 g/l in purified water and stirred to give an anti-corrosive coating composition. The resulting anti-corrosive coating composition was coated onto a commercial galvanized steel plate ("EG-MO", 700 × 150 × 0.8, Nippon Test Panel Co., Ltd.) and dried by heating the coated steel plate at a temperature of 150°C. The galvanized steel plate was previously sprayed at 60°C for 2 minutes with a detergent "Surf Cleaner 53S" (Nippon Paint Co., Ltd.) for alkaline degreasing, then washed with water and dried, followed by being coated with the above anti-corrosive coating composition with bar coater #3. The primary anti-corrosive properties (salt spray test properties (SST) and humidity resistance) and the topcoating adhesion properties (primary and secondary) of the steel plate obtained by coating with the anti-corrosive coating composition, as well as the storage stability of the anti-corrosive coating composition, were evaluated in the following evaluation methods, and the results are shown in Table 1.

### Examples 2 to 11

Anti-corrosive coating compositions were prepared in the same manner as in Example 1 except that the type and amount of the silane coupling agent added were changed, the sulfur-containing compound (or sulfur-containing ions) and phosphorus-containing ions were added as shown in Table 1, and they were coated on galvanized steel plate "EG-MO" in the same manner as in Example 1. The coating composition and the coated steel plate were evaluated in the same manner as in Example 1, and the results are shown in Table 1.

### Comparative Example 1

Galvanized steel plate "EG-MO" was coated in the same manner as in Example 1 except that the anti-corrosive coating composition used was a chromate-containing resin type anti-corrosively treating composition consisting of 100 parts by weight of polyolefin type resin "Hightech S-7024" (Toho Kagaku Kogyo K.K.), 70 parts by weight of colloidal silica "Snowtex N" (Nissan Kagaku Kogyo K.K.) and 5 parts by weight of strontium chromate. The coating agent and the coated-substrate-treated steel plate were evaluated in the same manner as in Example 1, and the results are shown in Table 1.

### Comparative Example 2

Galvanized steel plate "EG-MO" was coated in the same manner as in Example 1 except that galvanized steel plate "EG-MO" was immersed in a reactive chromate treating solution "Surf Zinc 1000" (Nippon Paint Co., Ltd.) at 60°C for 10 seconds such that the amount of the chromate applied after drying was 50 mg/m², then the steel plate was roll-squeezed and dried at 70°C for 20 seconds. The coating agent and the coated steel plate were evaluated in the same manner as in Example 1, and the results are shown in Table 1.

In Examples 1 to 11 and Comparative Examples 1 to 2 above, the primary anti-corrosive properties (salt spray test properties (SST) and humidity resistance), the topcoating adhesion properties (primary and secondary), and the storage stability of the coating agent were evaluated in the following methods under the following evaluation criteria.

### Evaluation methods

### [Primary anti-corrosive properties]

### a) Salt Spray Test (SST)

The coated face of a test material was sprayed with 5 % saline at 35 °C, and after 120 hours, the degree of white rust was evaluated in 10 ranks. Both a flat portion and an Erichsen 7 mm extruded portion were evaluated.

The evaluation criteria were as follows:
- Point 10:: no change.
- Point 9:: between 10 and 8.
- Point 8:: slight generation of white rust.
- Points 7-6:: between points 8 and 5.
- Point 5:: generation of white rust on half of the area.
- Points 4-2:: between points 5 and 1.
- Point 1:: generation of white rust on the whole surface.

### b) Humidity resistance (hot water resistance test)

After immersion in water at a temperature of 40°C for 20 days, the degree of generation of white rust was evaluated in 10 ranks. The evaluation criteria were as follows.
- Point 10:: no change.
- Point 9:: between 10 and 8.
- Point 8:: generation of slight swelling in the coating.
- Points 7-6:: between points 8 and 5.
- Point 5:: generation of swelling on half of the area.
- Points 4-2:: between points 5 and 1.
- Point 1:: generation of swelling on the whole surface.

### [Topcoating adhesion]

### a) Preparation of a test specimen

A commercial galvanized steel plate EG-MO material was degreased (for degreasing, "Surf Cleaner 53S" was sprayed at 60°C for 2 minutes), washed with water and dried at 80°C. The anti-corrosive coating composition of the present invention was applied onto the steel plate with a bar coater such that the amount of the applied coating composition after drying was 1 g/m², and the plate was dried at 150°C. Then, "Superluk 100" (Acrylic melamine coating composition, available from Nippon Paint Co., Ltd.) was applied thereon with a bar coater such that the thickness of the film after drying was 20 µm, and the plate was dried by heating it at a temperature of 150°C for 20 minutes, to prepare a test plate for topcoating adhesion test.

### b) Primary adhesion test

A portion cut with a 1 mm grid pattern was extruded until 7 mm with Erichsen, and a tape was adhered onto the extruded portion, and the tape releasability was evaluated in the same manner.

The evaluation criteria were as follows:
- Point 10:: no removal.
- Point 9:: 90 % or more residual coating.
- Point 8:: 80 % or more residual coating.
- Point 7:: 70 % or more residual coating.
- Point 6:: 60 % or more residual coating.
- Point 5:: 50 % or more residual coating.
- Point 4:: 40 % or more residual coating.
- Point 3:: 30 % or more residual coating.
- Point 2:: 20 % or more residual coating.
- Point 1:: 10 % or more residual coating.
- Point 0:: 0 to 10 % residual coating.

### c) Secondary adhesion test

The test plate was immersed in boiling water for 30 minutes and then the same test and evaluation as in the primary test were conducted.

### [Storage stability]

The anti-corrosive coating composition was stored for 3 months in a thermostatic chamber at 40 °C, then observed for its gelation and precipitation, and evaluated in the following criteria.
- ○:: Neither gelation nor precipitation occurs.
- ×:: Gelation or precipitation occur.

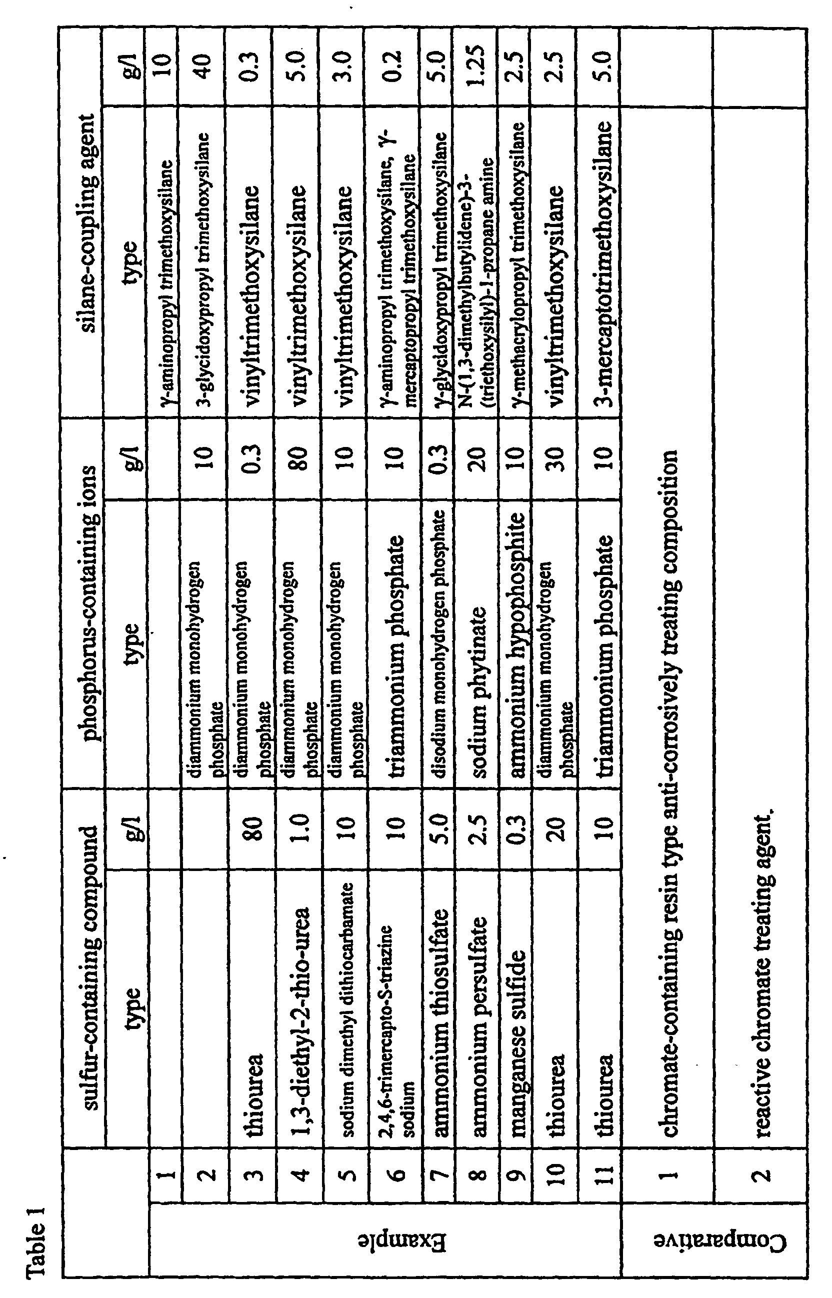

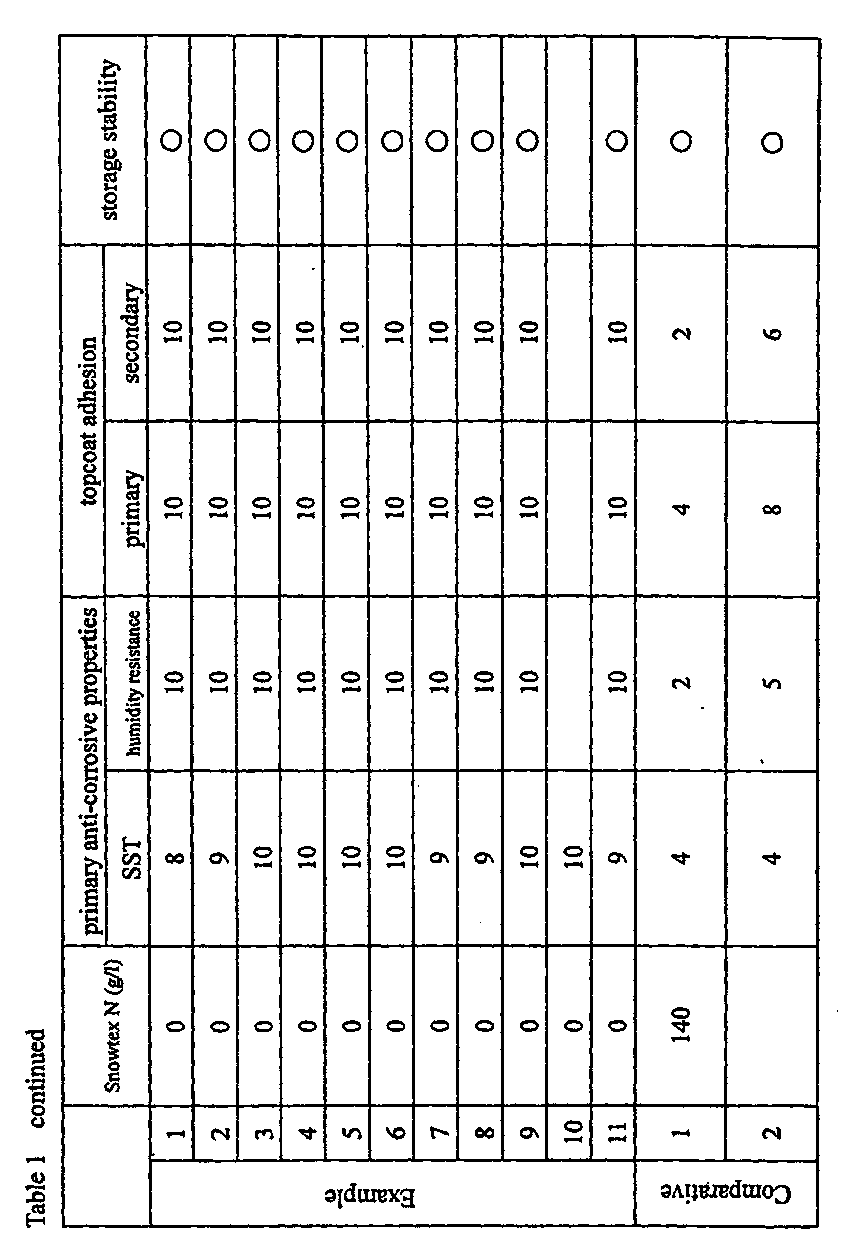

The resins used in the Examples and Comparative Examples below are the following commercial products:
Polyolefin type resin: "Hightech S-7024" (Toho Kagaku K.K.), or "PC 2200" (Shoei Kagaku K.K.) in Examples 7, 8 and 9.
Polyurethane type resin: "Bontiter HUX-320" (Asahi Denka Kogyo K.K.)
Acrylic resin: "EM 1220" (Nippon Paint Co., Ltd.)
Epoxy type resin: "Polyzol 8500" (Showa Kobunshi K.K.)
Polyester type resin: "Pessresin A-124G" (Takamatsu Yushi K.K.)

### Example 12

Polyolefin type resin "Hightech S-7024" and polyurethane type resin "Bontiter HUX-320" were mixed in purified water at a ratio of 1 : 1 by weight at a total resin concentration of 10 % by weight, and thiourea was dissolved in an amount of 5.0 g/l and ammonium monohydrogen phosphate was dissolved at a phosphate ion concentration of 1.25 g/l, and finally vinyl trimethoxysilane ("Saira Ace S-210", Chisso Corporation.) was added thereto at a concentration of 5 g/l, and the mixture was stirred and adjusted to pH 8.6 to give an anti-corrosive coating composition. The resulting anti-corrosive coating composition was coated onto a commercial galvanized steel plate ("EG-MO", 700 x 150 x 0.8, Nippon Test Panel K.K.) and dried by heating the coated steel plate at a temperature of 150°C. The galvanized steel plate was previously sprayed at 60°C for 2 minutes with a detergent "Surf Cleaner 53S" (Nippon Paint Co., Ltd.) for alkaline degreasing, then washed with water and dried, followed by being coated with the above anti-corrosive coating composition with bar coater #3 such that the thickness of the dried film was 0.5 µm. The primary SST and humidity resistance of the coated-substrate-treated steel plate obtained by coating with the anti-corrosive coating composition and the topcoating adhesion properties (primary and secondary) of the coated steel plate to which the topcoat was applied, as well as the storage stability of the coating composition, were evaluated in the same evaluation methods as in Examples 1 to 11, and the results are shown in Table 2.
Time of the saline spray test: 240 hours,
Topcoating: Bar coater #3 was used such that the thickness of the dried film was 0.5 µ m.

### Examples 13 to 24

An anti-corrosive coating was prepared in the same manner as in Example 12 except that the type and amounts of the resin, the sulfur-containing compound (or sulfur-containing ions), phosphorus-containing ions and of the silane coupling agent were changed as shown in Table 2, and the anti-corrosive coating was applied to the galvanized steel plate "EG-MO" in the same manner as in Example 12. The primary SST and humidity resistance of the coated steel plate obtained by coating with the anti-corrosive coating composition and the topcoating adhesion properties (primary and secondary) of the coated steel plate to which the topcoat was applied, as well as the storage stability of the coating composition, were evaluated in the same evaluation methods as in Example 12, and the results are shown in Table 2.

### Comparative Example 3

An anti-corrosive coating was prepared in the same manner as in Example 15 except that polyolefin type resin "Hightech S-7024" (Toho Kagaku Kogyo K.K.) was used as the resin, the amount of diammonium monohydrogen phosphate was 8.0 g/l, and 231 g colloidal silica "Snowtex N" (Nissan Kagaku Kogyo K.K.) was added in place of the silane coupling agent, and the anti-corrosive coating composition was applied to the galvanized steel plate "EG-MO" in the same manner as in Example 15. The primary anti-corrosive properties (SST and humidity resistance) of the coated steel plate obtained by coating with the anti-corrosive coating composition and the topcoating adhesion properties (primary and secondary) of the coated steel plate to which the topcoat was applied, as well as the storage stability of the coating composition, were evaluated in the same evaluation methods as in Example 12, and the results are shown in Table 2.

### Comparative Example 4

A chromate-containing resin type anti-corrosively treating composition comprising 100 parts by weight of polyolefin type resin "Hightech S-7024" (Toho Kagaku Kogyo K.K.), 70 parts by weight of colloidal silica "Snowtex N" (Nissan Kagaku Kogyo K.K.) and 5 parts by weight of strontium chromate was used as the anti-corrosive coating composition and applied to the galvanized steel plate "EG-MO" in the same manner as in Example 1. The primary anti-corrosive properties (SST and humidity resistance) of the coated steel plate obtained by coating with the anti-corrosive coating composition and the topcoating adhesion properties (primary and secondary) of the coated steel plate to which the topcoat was applied, as well as the storage stability of the coating composition, were evaluated in the same evaluation methods as in Example 12, and the results are shown in Table 2.

### Comparative Example 5

Galvanized steel plate "EG-MO" was coated in the same manner as in Example 12 except that galvanized steel plate "EG-MO" was immersed at 60°C for 10 seconds in a reactive chromate treating solution "Surfzinc 1000" (Nippon Paint Co., Ltd.) such that the amount of the applied chromate after drying was 50 mg/m², and then the plate was roll-squeezed and dried at 70°C for 20 seconds. The primary anti-corrosive properties (SST and humidity resistance) of the coated steel plate obtained by coating with the anti-corrosive coating composition and the topcoating adhesion properties (primary and secondary) of the coated steel plate to which the topcoat was applied, as well as the storage stability of the coating composition, were evaluated in the same evaluation methods as in Example 12, and the results are shown in Table 2.

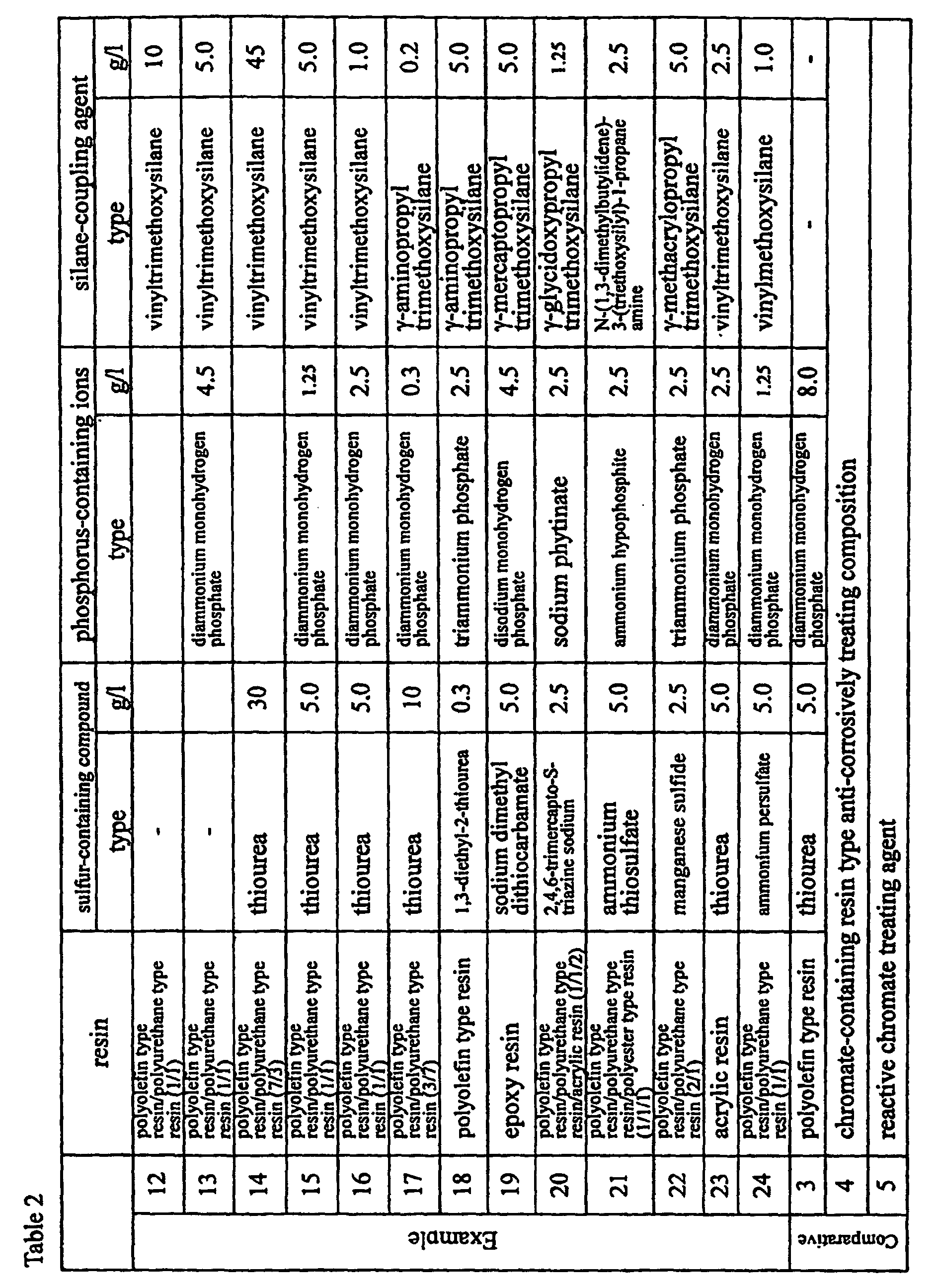

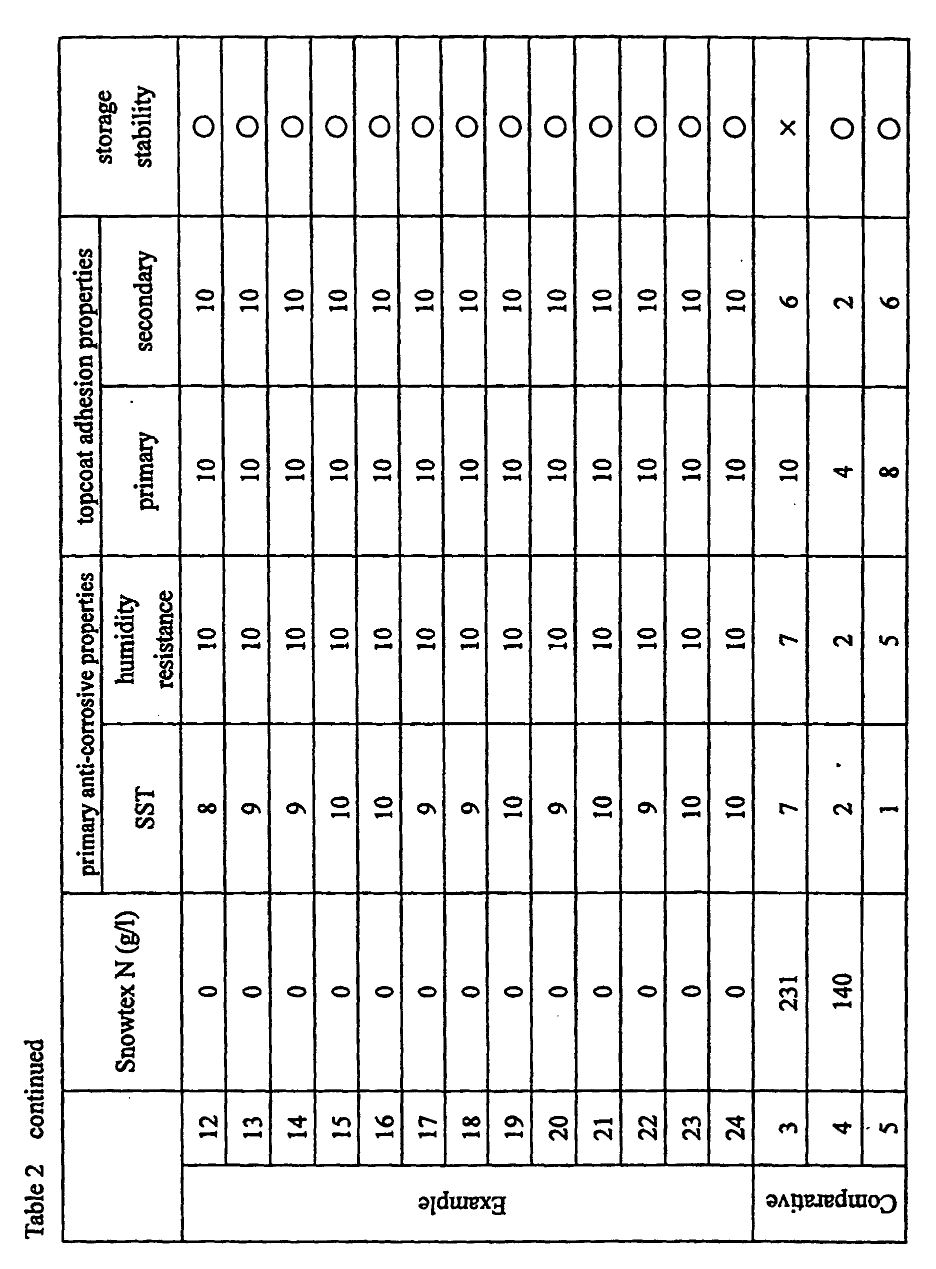

### Examples 25 to 31

Anti-corrosive coating compositions containing the silane coupling agent, phosphorus-containing ions and the sulfur-containing compound at the concentration shown in Table 3 were prepared. A commercial galvanized steel plate ("EG-MO", 701 × 150 × 0.8, Nippon Test Panel Co., Ltd.) was sprayed at 60°C for 2 minutes with the surfactant "Surf Cleaner 53S" (Nippon Paint Co., Ltd.) for alkaline degreasing, then washed with water and dried at 80°C, and the above anti-corrosive coating composition was applied with bar coater #3 such that the applied coating composition thereof after drying was 1 g/m², and the coated steel plate was dried by heating at a temperature of 150°C. Then, an aqueous solution or an aqueous suspension containing 20 % by weight of the resin shown in Table 3 was applied thereon with bar coater #3 such that the film thickness after drying was 1 µm, and the coated steel plate was dried by heating at a temperature of 150°C.

The primary anti-corrosive properties (SST and humidity resistance) and the topcoating adhesion properties (primary and secondary) of the steel plate thus subjected to anti-corrosive treatment were evaluated by the same evaluation methods as in Example 12, and the results are shown in Table 3.

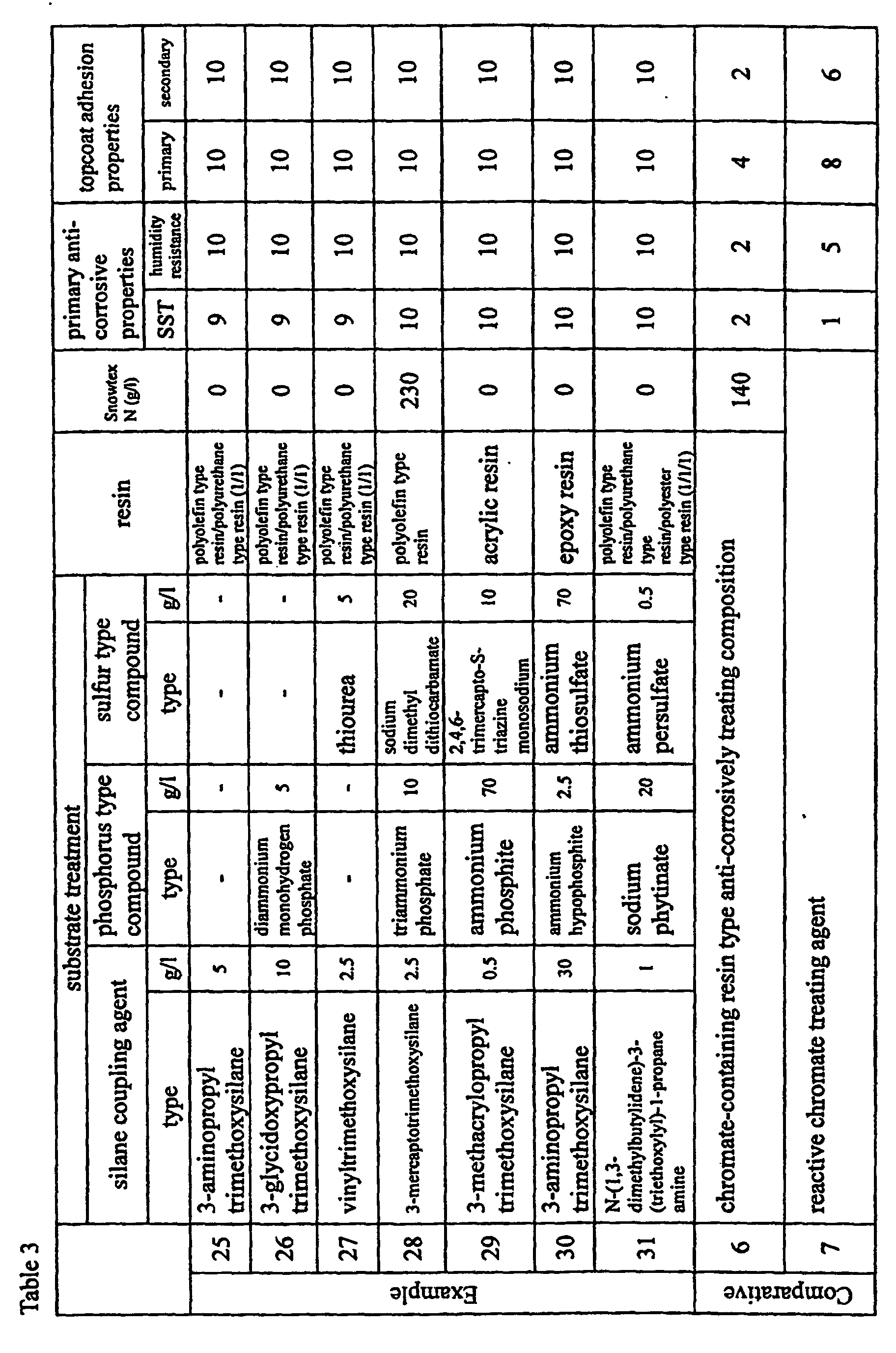

### Examples 32 to 38

Anti-corrosive coating compositions containing the silane coupling agent, phosphorus-containing ions and the sulfur-containing compound at the contents shown in Table 4 were prepared. The silane coupling agent, phosphorus-containing ions and the sulfur-containing compound were added in the amounts shown in Table 4 to the aqueous solution or aqueous suspension (resin concentration: 10 % by weight) shown in Table 4, to prepare resin-containing coating composition. First, a commercial galvanized steel plate ("EG-MO", 701 × 150 × 0.8, Nippon Test Panel Co., Ltd.) was sprayed at 60°C for 2 minutes with the surfactant "Surf Cleaner 53S" (Nippon Paint Co., Ltd.) for alkaline degreasing, then washed with water and dried at 80°C, followed by being coated with the above anti-corrosive coating composition with bar coater #3 such that the amount of the applied coating agent after drying was 1 g/m² and the coated steel plate was dried by heating at a temperature of 150°C. Then, the resin-containing coating composition described above was applied thereon with bar coater #3 such that the film thickness after drying was 1 µm, and the coated steel plate was dried by heating at a temperature of 150°C.

The primary anti-corrosive properties (SST and humidity resistance) and the topcoating adhesion properties (primary and secondary) of the coated steel plate thus subjected to anti-corrosive treatment were evaluated by the same evaluation methods as in Example 12 except that the time of the salt spray test was changed to 480 hours, and the results are shown in Table 5.

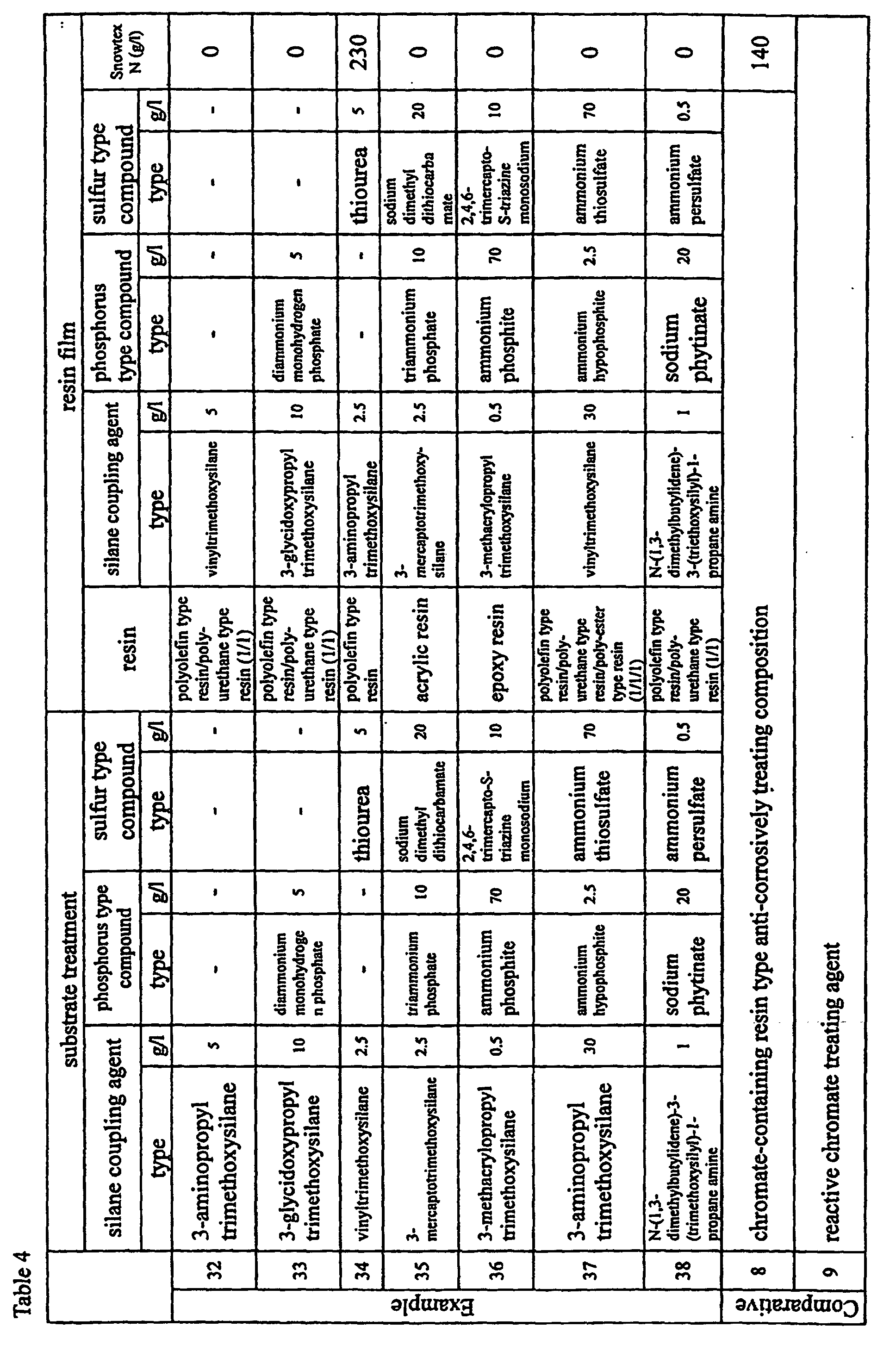

**Table 5**

| | | primary anti-corrosive properties | | topcoat adhesion properties | |
|---|---|---|---|---|---|
| | | SST | humidity resistance | primary | secondary |
| Example | 32 | 9 | 10 | 10 | 10 |
| | 33 | 10 | 10 | 10 | 10 |
| | 34 | 10 | 10 | 10 | 10 |
| | 35 | 10 | 10 | 10 | 10 |
| | 36 | 10 | 10 | 10 | 10 |
| | 37 | 10 | 10 | 10 | 10 |
| | 38 | 9 | 10 | 10 | 10 |
| Comparative Example | 8 | 1 | 1 | 4 | 2 |
| | 9 | 1 | 2 | 8 | 6 |

### Comparative Examples 6 and 7

The steel plate whose substrate for coating was treated with the treating agents used in Comparative Examples 4 and 5 in the same manner as in Comparative Examples 4 and 5 as well as the coated steel plate on which the topcoat was applied were evalutated for its primary anti-corrosive properties and topcoating adhesion properties in the same manner as in Examples 25 to 31. The results along with those of Examples 25 to 31 are shown in Table 3.

### Comparative Examples 8 and 9

The steel plate whose substrate for coating was treated with the treating agents used in Comparative Examples 4 and 5 in the same manner as in Comparative Examples 4 and 5 as well as the coated steel plate on which the topcoat was applied were evaluated for its primary anti-corrosive properties and topcoating adhesion properties in the same manner as in Examples 32 to 38. The results along with those of Examples 32 to 38 are shown in Table 5.

By applying the non-chromium type anti-corrosive coating composition of the present invention, galvanized steel plates can be endowed with corrosion resistance superior to that of conventional chromate-containing anti-corrosively treating composition. Further, it was confirmed that the anti-corrosive coating composition of the present invention is also excellent in storage stability.

## Claims

1. An anti-corrosive coating composition comprising a first silane coupling agent and/or a hydrolyzate condensate thereof in an amount of 0.1 to 50g, at least one kind of phosphorus-containing ions selected from phosphate ions, phosphite ions and hypophosphite ions in an amount of 0.1 to 5g, and at least one kind of sulfur-containing compound or sulfur-containing ions selected from thiocarbonyl compounds, sulfide ions, persulfate ions and thiosulfate ions in an amount of 0.1 to 50g, the respective amounts being per one litre of an aqueous resin solution or an aqueous resin suspension.

2. An anti-corrosive coating composition according to Claim 1, wherein the first silane coupling agent is vinylmethoxysilane, vinyltrimethoxysilane, vinylethoxysilane, vinyltriethoxysilane, 3-aminopropyl triethoxysilane, 3-glycidoxypropyl trimethoxysilane, 3-methacryloxypropyl trimethoxysilane, 3-mercaptopropyl trimethoxysilane, N-(1,3-dimethylbutylidene)-3-(triethoxysilyl)-1-propane amine, N,N'-bis[3-(trimethoxysilyl)propyl] ethylenediamine, N-(β-aminoethyl)-γ-aminopropylmethyl dimethoxysilane, N-(β-aminoethyl)-γ-aminopropyl trimethoxysilane, γ-aminopropyl trimethoxysilane, γ-aminopropyl triethoxysilane, γ-glycidoxypropyl trimethoxysilane, γ-glycidoxypropyl triethoxysilane, γ-glycidoxypropylmethyl dimethoxysilane, 2-(3,4-epoxycyclohexyl) ethyl trimethoxysilane, γ-methacryloxypropyl trimethoxysilane, γ-methacyloxypropyl trimethoxysilane, γ-mercaptopropyl trimethoxysilane, γ-mercaptopropyl triethoxysilane or N-[2-(vinylbenzylamino)ethyl]-3-aminopropyl trimethoxysilane, or a mixture thereof.

3. An anti-corrosive coating composition according to Claim 2, wherein the first silane coupling agent is vinylmethoxysilane, vinylethoxysilane, 3-aminopropyl triethoxysilane, 3-glycidoxypropyl trimethoxysilane, 3-methacryloxypropyl trimethoxysilane, 3-mercaptopropyl trimethoxysilane, N-(1,3-dimethylbutylidene)-3-(triethoxysilyl)-1-propane amine or N,N'-bis[3-(trimethoxysilyl)propyl] ethylenediamine or a mixture thereof.

4. The use of an anti-corrosive coating composition formulated in accordance with any preceding Claim, for application to zinc-coated steel or non-coated steel.

5. A method for anti-corrosive treatment of a metal material comprising the step of coating the metal material with an anti-corrosive coating composition formulated in accordance with any of Claims 1-3.

6. A method according to Claim 5, further comprising, prior to the step of coating the metal with the anti-corrosive coating composition, the steps of:
(i) coating the surface of the metal material with a resin-free anti-corrosive coating composition comprising a second silane coupling agent and/or a hydrolyzate condensate thereof in water in an amount of 0.1 to 50 g per one litre of the composition, and
(ii) drying the coated metal material.

7. A method according to Claim 6, wherein the resin-free anti-corrosive coating composition further comprises at least one kind of phosphorus-containing ions selected from phosphate ions, phosphite ions and hypophosphite ions in water in an amount of 0.1 to 100 g per one litre of the composition.

8. A method according to Claim 6, wherein the resin-free anti-corrosive coating composition further comprises at least one kind of sulfur-containing compound or sulfur-containing ions selected from thiocarbonyl compounds, triazine thiol compounds, sulfide ions, persulfate ions and thiosulfate ions in water in an amount of 0.1 to 100 g per one litre of the composition.

9. A method according to Claim 6 wherein the resin-free anti-corrosive coating composition further comprises, per litre, 0.1 - 100 g of at least one kind of phosphorus-containing ions selected from phosphate ions, phosphite ions and hypophosphite ions, and 0.1 - 100 g of at least one kind of sulfur-containing compound or sulfur-containing ions selected from thiocarbonyl compounds, triazine thiol compounds, sulfide ions, persulfate ions and thiosulfate ions in water.

10. A method according to any of Claims 6-9, wherein the second silane coupling agent is vinylmethoxysilane, vinyltrimethoxysilane, vinylethoxysilane, vinyltriethoxysilane, 3-aminopropyl triethoxysilane, 3-glycidoxypropyl trimethoxysilane, 3-methacryloxypropyl trimethoxysilane, 3-mercaptopropyl trimethoxysilane, N-(1,3-dimethylbutylidene)-3-(triethoxysilyl)-1-propane amine, N,N'-bis[3-(trimethoxysilyl)propyl] ethylenediamine, N-(β-aminoethyl)-γ-aminopropylmethyl dimethoxysilane, N-(β-aminoethyl)-γ-aminopropyl trimethoxysilane, γ-aminopropyl trimethoxysilane, γ-aminopropyl triethoxysilane, γ-glycidoxypropyl trimethoxysilane, γ-glycidoxypropyl triethoxysilane, γ-glycidoxypropylmethyl dimethoxysilane, 2-(3,4-epoxycyclohexyl) ethyl trimethoxysilane, γ-methacryloxypropyl trimethoxysilane, γ-methacyloxypropyl trimethoxysilane, γ-mercaptopropyl trimethoxysilane, γ-mercaptopropyl triethoxysilane or N-[2-(vinylbenzylamino)ethyl]-3-aminopropyl trimethoxysilane, or a mixture thereof.

11. A method according to Claim 10, wherein the second silane coupling agent is vinylmethoxysilane, vinylethoxysilane, 3-aminopropyl triethoxysilane, 3-glycidoxypropyl trimethoxysilane, 3-methacryloxypropyl trimethoxysilane, 3-mercaptopropyl trimethoxysilane, N-(1,3-dimethylbutylidene)-3-(triethoxysilyl)-1-propane amine or N,N'-bis[3-(trimethoxysilyl)propyl] ethylenediamine or a mixture of two or more of these.

12. A method according to any of Claims 5-11, wherein the metal material is a zinc-coated steel or a non-coated steel.

13. A metal material subjected to an anti-corrosive treatment in accordance with the method of any of Claims 5-12.

## Patentansprüche

1. Korrosionsschutzanstrichzusammensetzung umfassend ein erstes Silankupplungsmittel und/oder ein Hydrolysatkondensat davon in einer Menge von 0,1 bis 50 g, mindestens eine Art an Phosphor enthaltenden Ionen ausgewählt aus Phosphationen, Phosphitionen und Hypophosphitionen in einer Menge von 0,1 bis 5 g, und mindestens eine Art an Schwefel enthaltender Verbindung oder Schwefel enthaltenden Ionen ausgewählt aus Thiocarbonylverbindungen, Sulfidionen, Persulfationen und Thiosulfationen in einer Menge von 0,1 bis 50 g, wobei die entsprechenden Mengen pro 1 Liter einer wässrigen Harzlösung oder einer wässrigen Harzsuspension sind.

2. Korrosionsschutzanstrichzusammensetzung gemäß Anspruch 1, worin das erste Silankupplungsmittel ist:
Vinylmethoxysilan, Vinyltrimethoxysilan, Vinylethoxysilan, Vinyltriethoxysilan, 3-Aminopropyltriethoxysilan, 3-Glycidoxypropyltrimethoxysilan, 3-Methacryloxypropyltrimethoxysilan, 3-Mercaptopropyltrimethoxysilan, N-(1,3-Dimethylbutyliden)-3-(triethoxysilyl)-1-propanamin, N,N'-Bis[3-(trimethoxysilyl)propyl]ethylendiamin, N-(β-Aminoethyl)-γ-aminopropylmethyldimethoxysilan, N-(β-Aminoethyl)-γ-aminopropyltrimethoxysilan, γ-Aminopropyltrimethoxysilan, γ-Aminopropyltriethoxysilan, γ-Glycidoxypropyltrimethoxysilan, γ-Glycidoxypropyltriethoxysilan, γ-Glycidoxypropylmethyldimethoxysilan, 2-(3,4-Epoxycyclohexyl) ethyltrimethoxysilan, γ-Methacryloxypropyltrimethoxysilan, γ-Methacyloxypropyltrimethoxysilan, γ-Mercaptopropyltrimethoxysilan, γ-Mercaptopropyltriethoxysilan oder N-[2-(Vinylbenzylamino)ethyl]-3-aminopropyltrimethoxysilan, oder eine Mischung davon.

3. Korrosionsschutzanstrichzusammensetzung gemäß Anspruch 2, worin das erste Silankupplungsmittel ist:
Vinylmethoxysilan, Vinylethoxysilan, 3-Aminopropyltriethoxysilan, 3-Glycidoxypropyltrimethoxysilan, 3-Methacryloxypropyltrimethoxysilan, 3-Mercaptopropyltrimethoxysilan, N-(1,3-Dimethylbutyliden)-3-(triethoxysilyl)-1-propanamin oder N,N'-Bis[3-(trimethoxysilyl)propyl]ethylendiamin oder eine Mischung davon.

4. Verwendung einer gemäß einem der vorangehenden Ansprüche formulierten Korrosionsschutzanstrichzusammensetzung zur Anwendung auf zinkbeschichteten Stahl oder nicht beschichteten Stahl.

5. Verfahren zur Korrosionsschutzbehandlung eines Metallmaterials umfassend den Schritt des Beschichtens des Metallmaterials mit einer gemäß einem der Ansprüche 1 bis 3 formulierten Korrosionsschutzanstrichzusammensetzung.

6. Verfahren gemäß Anspruch 5, ferner umfassend, vor dem Schritt des Beschichtens des Metalls mit der Korrosionsschutzanstrichzusammensetzung, die Schritte:
(i) Beschichten der Oberfläche des Metallmaterials mit einer harzfreien Korrosionsschutzanstrichzusammensetzung umfassend ein zweites Silankupplungsmittel und/oder ein Hydrolisatkondensat davon in Wasser in einer Menge von 0,1 bis 50 g pro 1 Liter der Zusammensetzung, und
(ii) Trocknen des beschichteten Metallmaterials.

7. Verfahren gemäß Anspruch 6, worin die harzfreie Korrosionsschutzanstrichzusammensetzung ferner umfasst: mindestens eine Art an Phosphor enthaltenden Ionen ausgewählt aus Phosphationen, Phosphitionen und Hypophosphitionen in Wasser in einer Menge von 0,1 bis 100 g pro 1 Liter der Zusammensetzung.

8. Verfahren gemäß Anspruch 6, worin die harzfreie Korrosionsschutzanstrichzusammensetzung ferner umfasst: mindestens eine Art an Schwefel enthaltender Verbindung oder Schwefel enthaltenden Ionen ausgewählt aus Thiocarbonylverbindungen, Triazinthiolverbindunge, Sulfidionen, Persulfationen und Thiosulfationen in Wasser in einer Menge von 0,1 bis 100 g pro 1 Liter der Zusammensetzung.

9. Verfahren gemäß Anspruch 6, worin die harzfreie Korrosionsschutzanstrichzusammensetzung ferner umfasst, pro Liter, 0,1 bis 100 g mindestens einer Art an Phosphor enthaltenden Ionen ausgewählt aus Phosphationen, Phosphitionen und Hypophosphitionen, und 0,1 bis 100 g mindestens einer Art an Schwefel enthaltender Verbindung oder Schwefel enthaltenden Ionen ausgewählt aus Thiocarbonylverbindungen, Triazinthiolverbindungen, Sulfidionen, Persulfationen und Thiosulfationen in Wasser.

10. Verfahren gemäß einem der Ansprüche 6 bis 9, worin das zweite Silankupplungsmittel ist:
Vinylmethoxysilan, Vinyltrimethoxysilan, Vinylethoxysilan, Vinyltriethoxysilan, 3-Aminopropyltriethoxysilan, 3-Glycidoxypropyltrimethoxysilan, 3-Methacryloxypropyltrimethoxysilan, 3-Mercaptopropyltrimethoxysilan, N-(1,3-Dimethylbutyliden)-3-(triethoxysilyl)-1-propanamin, N,N'-Bis[3-(trimethoxysilyl)propyl]ethylendiamin, N-(β-Aminoethyl)-γ-aminopropylmethyldimethoxysilan, N-(β-Aminoethyl)-γ-aminopropyltrimethoxysilan, γ-Aminopropyltrimethoxysilan, γ-Aminopropyltriethoxysilan, γ-Glycidoxypropyltrimethoxysilan, γ-Glycidoxypropyltriethoxysilan, γ-Glycidoxypropylmethyldimethoxysilan, 2-(3,4-Epoxycyclohexyl)ethyltrimethoxysilan, γ-Methacryloxypropyltrimethoxysilan, γ-Methacyloxypropyltrimethoxysilan, γ-Mercaptopropyltrimethoxysilan, γ-Mercaptopropyltriethoxysilan oder N-[2-(Vinylbenzylamino)ethyl]-3-aminopropyltrimethoxysilan, oder eine Mischung davon.

11. Verfahren gemäß Anspruch 10, worin das zweite Silankupplungsmittel ist:
Vinylmethoxysilan, Vinylethoxysilan, 3-Aminopropyltriethoxysilan, 3-Glycidoxypropyltrimethoxysilan, 3-Methacryloxypropyltrimethoxysilan, 3-Mercaptopropyltrimethoxysilan, N-(1,3-Dimethylbutyliden)-3-(triethoxysilyl)-1-propanamin oder N,N'-Bis[3-(trimethoxysilyl)propyl]ethylendiamin, oder eine Mischung von zwei oder mehr davon.

12. Verfahren gemäß einem der Ansprüche 5 bis 11, worin das Metallmaterial ein zinkbeschichteter Stahl oder nicht beschichteter Stahl ist.

13. Metallmaterial, das einer Korrosionsschutzbehandlung gemäß dem Verfahren eines der Ansprüche 5 bis 12 unterworfen wird.

## Revendications

1. Composition de revêtement anticorrosion comprenant un premier agent de couplage de type silane et/ou un produit de condensation d'un hydrolysat de celui-ci en une quantité de 0,1 à 50 g, au moins un type d'ions contenant du phosphore choisis parmi les ions phosphate, les ions phosphite et les ions hypophosphite en une quantité de 0,1 à 50 g, et au moins un type de composé contenant du soufre ou d'ions contenant du soufre choisis parmi les composés thiocarbonylés, les ions sulfure, les ions persulfate et les ions thiosulfate en une quantité de 0,1 à 50 g, les quantités respectives étant exprimées par litre d'une solution aqueuse de résine ou d'une suspension aqueuse de résine.

2. Composition de revêtement anticorrosion selon la revendication 1, dans laquelle le premier agent de couplage de type silane est le vinylméthoxysilane, le vinyltriméthoxysilane, le vinyléthoxysilane, le vinyltriéthoxysilane, le 3-aminopropyltriéthoxysilane, le 3-glycidoxypropyltriméthoxysilane, le 3-méthacryloxypropyltriméthoxysilane, le 3-mercaptopropyltriméthoxysilane, la N-(1,3-diméthylbutylidène)-3-(triéthoxysilyl)-1-propaneamine, la N,N'-bis[3-(triméthoxysilyl)propyl]éthylènediamine, le N-(β-aminoéthyl)-γ-aminopropylméthyldiméthoxysilane, le N-(β-aminoéthyl)-γ-aminopropyltriméthoxysilane, le γ-aminopropyltriméthoxysilane, le γ-aminopropyltriéthoxysilane, le γ-glycidoxypropyltriméthoxysilane, le γ-glycidoxypropyltriéthoxysilane, le γ-glycidoxypropylméthyldiméthoxysilane, le 2-(3,4-époxycyclohexyl)éthyltriméthoxysilane, le γ-méthacryloxypropyltriméthoxysilane, le γ-méthacyloxypropyltriméthoxysilane, le γ-mercaptopropyltriméthoxysilane, le γ-mercaptopropyltriéthoxysilane ou le N-[2-(vinylbenzylamino)éthyl]-3-aminopropyltriméthoxysilane, ou un mélange de ceux-ci.

3. Composition de revêtement anticorrosion selon la revendication 2, dans laquelle le premier agent de couplage de type silane est le vinylméthoxysilane, le vinyléthoxysilane, le 3-aminopropyltriéthoxysilane, le 3-glycidoxypropyltriméthoxysilane, le 3-méthacryloxypropyltriméthoxysilane, le 3-mercaptopropyltriméthoxysilane, la N-(1,3-diméthylbutylidène)-3-(triéthoxysilyl)-1-propaneamine ou la N,N'-bis[3-(triméthoxysilyl)propyl]éthylènediamine, ou un mélange de ceux-ci.

4. Utilisation d'une composition de revêtement anticorrosion formulée selon l'une quelconque des revendications précédentes, pour l'appliquer sur de l'acier revêtu de zinc ou de l'acier non revêtu.

5. Procédé pour le traitement anticorrosion d'un matériau métallique comprenant l'étape consistant à revêtir le matériau métallique avec une composition de revêtement anticorrosion formulée selon l'une quelconque des revendications 1 à 3.

6. Procédé selon la revendication 5, comprenant en outre, avant l'étape consistant à revêtir le métal avec la composition de revêtement anticorrosion, les étapes consistant à :
(i) revêtir la surface du matériau métallique avec une composition de revêtement anticorrosion exempte de résine comprenant un second agent de couplage de type silane et/ou un produit de condensation d'un hydrolysat de celui-ci dans de l'eau en une quantité de 0,1 à 50 g par litre de la composition, et
(ii) sécher le matériau métallique revêtu.

7. Procédé selon la revendication 6, dans lequel la composition de revêtement anticorrosion exempte de résine comprend en outre au moins un type d'ions contenant du phosphore choisis parmi les ions phosphate, les ions phosphite et les ions hypophosphite dans de l'eau en une quantité de 0,1 à 100 g par litre de la composition.

8. Procédé selon la revendication 6, dans lequel la composition de revêtement anticorrosion exempte de résine comprend en outre au moins un type de composé contenant du soufre ou d'ions contenant du soufre choisis parmi les composés thiocarbonylés, les composés de type triazinethiol, les ions sulfure, les ions persulfate et les ions thiosulfate dans de l'eau en une quantité de 0,1 à 100 g par litre de la composition.

9. Procédé selon la revendication 6, dans lequel la composition de revêtement anticorrosion exempte de résine comprend en outre, par litre, 0,1 à 100 g d'au moins un type d'ions contenant du phosphore choisis parmi les ions phosphate, les ions phosphite et les ions hypophosphite, et 0,1 à 100 g d'au moins un type de composé contenant du soufre ou d'ions contenant du soufre choisis parmi les composés thiocarbonylés, les composés de type triazinethiol, les ions sulfure, les ions persulfate et les ions thiosulfate dans de l'eau.

10. Procédé selon l'une quelconque des revendications 6 à 9, dans lequel le second agent de couplage de type silane est le vinylméthoxysilane, le vinyltriméthoxysilane, le vinyléthoxysilane, le vinyltriéthoxysilane, le 3-aminopropyltriéthoxysilane, le 3-glycidoxypropyltriméthoxysilane, le 3-méthacryloxypropyltriméthoxysilane, le 3-mercaptopropyltriméthoxysilane, la N-(1,3-diméthylbutylidène)-3-(triéthoxysilyl)-1-propaneamine, la N,N'-bis[3-(triméthoxysilyl)propyl]éthylènediamine, le N-(β-aminoéthyl)-γ-aminopropylméthyldiméthoxysilane, le N-(β-aminoéthyl)-γ-aminopropyltriméthoxysilane, le γ-aminopropyltriméthoxysilane, le γ-aminopropyltriéthoxysilane, le γ-glycidoxypropyltriméthoxysilane, le γ-glyddoxypropyltriéthoxysilane, le γ-glycidoxypropylméthyldiméthoxysilane, le 2-(3,4-époxycyclohexyl)éthyltriméthoxysilane, le γ-méthacryloxypropyltriméthoxysilane, le γ-méthacyloxypropyltriméthoxysilane, le γ-mercaptopropyltriméthoxysilane, le γ-mercaptopropyltriéthoxysilane ou le N-[2-(vinylbenzylamino)éthyl]-3-aminopropyltriméthoxysilane, ou un mélange de ceux-ci.

11. Procédé selon la revendication 10, dans lequel le second agent de couplage de type silane est le vinylméthoxysilane, le vinyléthoxysilane, le 3-aminopropyltriéthoxysilane, le 3-glycidoxypropyltriméthoxysilane, le 3-méthacryloxypropyltriméthoxysilane, le 3-mercaptopropyltriméthoxysilane, la N-(1,3-diméthylbutylidène)-3-(triéthoxysilyl)-1-propaneamine ou la N,N'-bis[3-(triméthoxysilyl)propyl]éthylènediamine, ou un mélange de deux de ceux-ci ou plus.

12. Procédé selon l'une quelconque des revendications 5 à 11, dans lequel le matériau métallique est de l'acier revêtu de zinc ou de l'acier non revêtu.

13. Matériau métallique soumis à un traitement anticorrosion conformément au procédé selon l'une quelconque des revendications 5 à 12.
